# EUROPEAN PATENT APPLICATION

(11) **EP 4 258 504 A1**
(43) Date of publication of application: **11.10.2023**
(21) Application number: 22167273.6
(22) Date of filing: 08.04.2022
(51) Int. Cl.: H02J 3/38, H02M 1/00, H02M 7/483

(54) **CONVERTER AND METHOD FOR OPERATING THEREOF**

(71) Applicant: Siemens Energy Global GmbH & Co. KG, 81739 München (DE)
(72) Inventor: Alvarez Valenzuela, Rodrigo Alonso, 90408 Nürnberg (DE); Huq, S M Iftekharul, 91052 Erlangen (DE); Schön, Andre, 91058 Erlangen (DE); Strong, Blazej Edward, 91074 Herzogenaurach (DE)

(57) **Abstract**

The invention relates to a converter (1) having an AC side (2) to be connected to a AC network (4) at a connecting point (2a), and a grid following controller (14) configured to control a steady state current at said connecting point. The converter is characterized in that the converter further comprises a grid forming controller (15) configured to actively control the frequency and voltage at said connecting point, wherein the grid following controller and the grid forming controller share an underlying current controller (17). The invention further relates to a method for operating the converter.

## Description

The invention relates to a converter having an AC side to be connected to a AC network at a connecting point, and a grid following controller configured to control a steady state current at said connecting point.

Usually, a converter in a so-called grid following mode uses the grid following controller to control the AC side current, and to follow a frequency and a phase angle of a grid voltage (of the AC network) through a phase-locked loop control (thus synchronizing to the grid). Currently, most of the existing converters in high-voltage applications operate in the grid following mode.

The high penetration of power electronics devices (such as HVDC, STATCOM) and renewable energy devices application usage in relatively weaker grid conditions has significantly increased the necessity for the implementation of grid forming converters (i.e. a converter operated in a grid forming mode) over the last years. In the grid forming mode, the converter actively controls its frequency and voltage output.

A discussion of grid following and grid forming control mechanisms is found e.g. in Li et al., "Revisiting Grid-Forming and Grid-Following Inverters: A Duality Theory", IEEE Transactions on Power Systems, 2021.

The object of the invention is to propose a converter which allows an effective and reliable integration of renewable energy sources like wind and solar plants.

The object is achieved by a converter according to claim 1.

Accordingly, the converter of the present invention further comprises a grid forming controller configured to actively control the frequency and voltage at said connecting point, wherein the grid following controller and the grid forming controller share an underlying current controller, being suitably configured to control/limit the converter currents. The grid forming control and the grid following control, particularly the AC-control of the converter, preferably are embedded in an integral converter control which allow the seamless on-line change of grid following in grid forming controls.

The present invention strongly reduces the project and costumer risks. Performance for grid following modes remains unchanged and can be use in most network configurations. This performance is well known and tested for Grid Code Compliance. The invention allows the parallel use of grid forming with grid following control to compensate possible operating point deviations and improve the dynamics for specific applications. Moreover, it allows the division of the current reference/measurement in different components (PPS/NPS) for the grid forming control, which improves the compatibility with functions, affecting individual component of the current such as supporting functions like active damping, voltage modulation, and others. Assuming the necessary converter hardware requirements (high-performance high-speed control hardware) to be available, the controllers according to the invention can be implemented via a software upgrade. The potential possibility to switch between the grid following and grid forming control modes allows the network operator to use the most beneficial features of HVDC VSC or Frequency Stabilizer systems (i.e. maximizing power transmission capabilities or reactive power output) in strong networks, and also to use the converter to stabilize a weak network.

The transition between a grid following and a grid forming mode can be implemented either as a hard transition, like in a switch, or a soft transition in a smooth switchover. In some applications both controls can be active in parallel, whereas the grid following controller generates the steady state current setpoint for the P/Q operation point, and the grid forming control generates additional current offset setpoints to mitigate e.g. voltage or angular steps or support week grid conditions in a grid supporting manner.

The proposed structure allows the use of grid forming and grid following control also as part of a pre-defined sequence to improve the system performance. For example, in an emergency scenario which starts in grid forming, the control could be changed to grid following to allow faster dynamics and faster set point changes in the system, achieving faster the required operating point for the grid balancing function.

The proposed control structure preferably is implemented in a high-performance high-speed control hardware (sample time between 10 and 100us with total delays below 200us), like for example a Multicore, a Multi DSP or a System on Chip.

According to an embodiment the outputs of said grid forming and said grid following controller are connected with the underlying current controller via a virtual admittance (e.g. implemented as a non-linear gain function module). This allows a very fast and effective limitation of the current in the converter. Like in a voltage/frequency controller for offshore wind parks connected to HVDC links, the output of the current controller can be used as feedback to generate a delta voltage over the virtual admittance. This defines the inherent answer of the system, without requiring AC-voltage measurements and without the drawbacks of control delays.

The grid forming controller may comprise a voltage angle and/or a frequency controller for active power control. The grid forming functionality is thus implemented in a supervisory control layer with a voltage angle and/or frequency controller for active power control and/or a voltage magnitude controller for reactive power control. The synchronization with the grid can be achieved by means of power-based synchronization. Since the underlying controller is a current controller, the concept remains compatible with classical grid following controllers. The voltage magnitude controller may comprise a linear controller configured to change the reference amplitude of the AC voltage based on a reactive power reference and on a measured reactive power. The voltage magnitude controller for reactive power control implements thus a linear controller, which changes the reference amplitude of the ac voltage based on the error of the required reactive power by the system. The relation between the reactive power set point and the ac voltage can be defined by a predefined voltage droop.

According to an embodiment, the voltage angle and/or a frequency controller is based on a model of an ideal answer of an electrical machine by means of a transfer function. Accordingly, the voltage angle and/or frequency controller is based on enhanced electromechanics designed to model the ideal answer of an electrical machine by means of at least one transfer function, thereby not restricted by the physical limitations of a real synchronous generator. In the proposed implementation, the virtual inertia can be coupled with an available energy and power variation in the converter.

According to an embodiment said grid forming controller structure is designed for a sequence selective control, generating separate control setpoint to the underlying current controller for a positive and a negative sequence system. In this manner the grid forming behavior is closer to an actual voltage source, which is an often-desired behavior and additionally advantageous with regard to other control functions, such as active harmonic damping, filtering or voltage modulation.

The grid following controller preferably comprises a current setpoint controller to control a fixed active and reactive power operation point and/or a converter energy balance.

According to an embodiment the converter has a DC side to be connected to a DC link or to an electrical energy storage device. The concept described herein can be used for an SVC Frequency Stabilizer device which is e.g. based on a B6 converter with ultracapacitors connected to the DC terminals. A B6 converter configuration is characterized by three converter phase branches each extending between the DC terminals. Each phase branch comprises two converter valves (thus six in total), wherein an AC terminal is arranged between the respective converter valves of every converter phase. The energy storage connected to the DC side of the converter enables several seconds of operation in active power range. When the voltage limits of the supercapacitor at the DC side are exceeded, the storage will be charged or discharged respectively, allowing the island operation of the SVC Frequency Stabilizer. The voltage setpoint can be calculated by an Automatic Voltage Regulator (AVR), which controls the voltage at the connecting point to the given reference. The speed of the response of the controller determines the stability of the converter during islanding condition. The active power of the frequency stabilizer in normal condition is zero. During frequency disturbances, the active power is injected/absorbed to counteract the frequency change.

The converter is preferably a modular multilevel converter. A modular multilevel converter (MMC) comprises a series of switching modules in each of the converter valves (sometimes also referred to as converter arms). Each of the switching modules comprises switch-off type semiconductor switches, like e.g. IGBT, and an energy store, like e.g. a capacitor. Every switching module can be individually controlled to provide certain module voltage at its terminals (e.g. the capacitor voltage or a zero voltage in case of a half-bridge module, or the capacitor voltage, a negative capacity voltage or a zero voltage in case of a full-bridge module).

The invention further relates to a method for operating a converter according to the invention.

The object of the invention is to propose such a method which allows an effective and reliable integration of renewable energy sources like wind and solar plants.

The object is achieved by an afore mentioned method comprising the steps of performing a grid following control by means of the grid following controller, and performing a grid forming control by means of the grid forming controller, wherein a switching over from said grid following control to said grid forming control is performed in an uninterrupted operation.

The invention is explained below with reference to exemplary embodiment illustrated in the figures 1 to 3.
Figure 1 shows a schematic view of a converter according to an embodiment of the invention;
Figure 2 shows a schematic view of the converter of figure 1;
Figure 3 shows a schematic view of a control structure for the converter of figure 1.

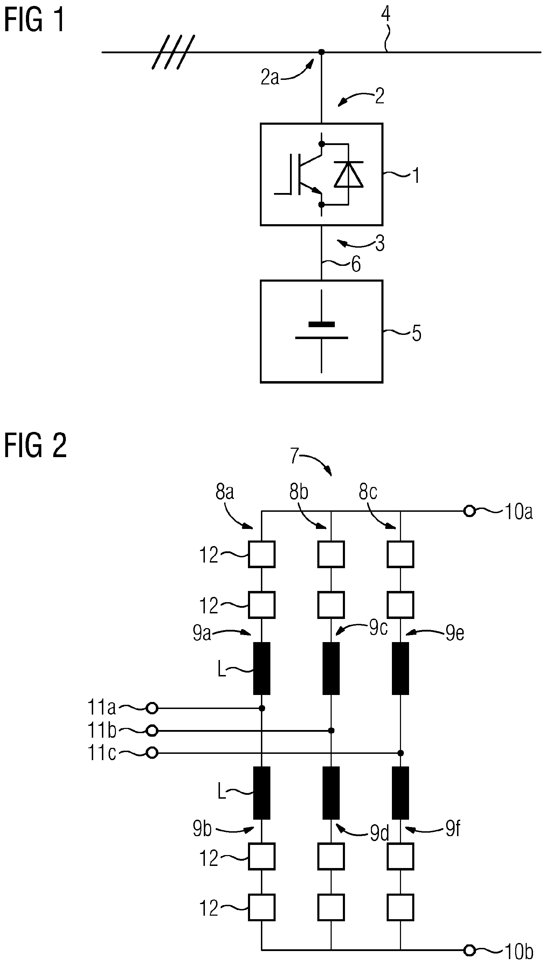

A converter 1 with an AC side 2 and a DC side 3 is depicted in figure 1. The converter 1 is a voltage source converter, in particular a modular multilevel converter (MMC). The AC side 2 of the converter 1 is connected with an AC grid 4 at a connecting point 2a. The DC side 3 of the converter is connected with an electrical energy storage device 5 via a DC link 6. The converter 1 is designed to stabilize the AC grid 4 by exchanging active and reactive power with the AC grid 4.

The MMC 7 shown in figure 2 comprises three phase branches 8a-c and six converter valves (also denoted as arm) 9a-f. Every converter arm 9a-f extends between one of the DC poles or terminals 10a,b, constituting a DC side of the converter 7, and one of the AC terminals 11a-c constituting an AC side of the converter 7. Each converter valve 9a-f comprises an arm inductance L and a number of switching modules 12 connected in series. The number of switching modules 12 in every converter arm 9a-f is in general arbitrary (not restricted to two per valve) and can be adapted to the given application. According to the example shown in figure 2 all switching modules 12 are so-called full-bridge switching modules. A proper control of the semiconductor switches of a given switching module 12 creates a positive, a negative or a zero voltage across its terminals.

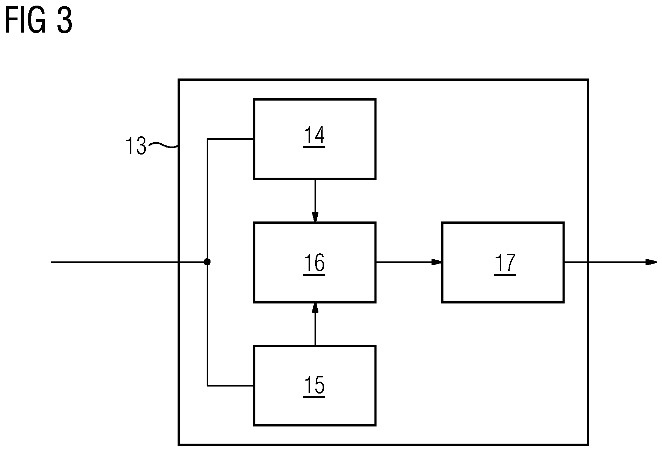

Figure 3 shows a converter control system 13 suitable for the converter shown in figure 1 and or figure 2 connected with an AC grid at a connecting point. It comprises a grid following controller 14 and a grid forming controller 15 both implemented as control modules within the control system 13. As its input, the control system 13 (respectively the controllers 14, 15) receives all the information usually needed for the converter control, in particular the measured AC and DC side currents and voltages and the AC grid frequency as well as the corresponding reference values. The grid following and the grid forming controller 14, 15 share an underlying current controller 17. The outputs of said grid forming and said grid following controller 14, 15, are connected with the underlying current controller 17 via a virtual admittance 16.

The grid forming controller 15 is configured to actively control the frequency and voltage at a connecting point (e.g. connecting point 2a in figure 1). It comprises a voltage angle and a frequency controller for active power control (which can be implemented as functional sub-units of the grid forming controller). The voltage angle and/or a frequency controller is based on a model of an ideal answer of an electrical machine by means of a transfer function. The model is a machine model including electromechanical and electromagnetical properties of the converter. The grid forming controller 15, respectively the model, can be implemented e.g. as a virtual synchronous machine (VISMA), a virtual synchronous generator or a synchronous power controller. The grid forming controller 15 also comprises a voltage magnitude controller for reactive power control having a linear controller (each of those preferably implemented as functional sub-units of the grid forming controller) configured to change the reference amplitude of the AC voltage based on a reactive power reference and on a measured reactive power. Moreover, the grid forming controller 15 generates separate control setpoints to the underlying current controller for a positive and a negative sequence system.

The grid following controller 14 comprises a current setpoint controller (which can be implemented as functional sub-units of the grid following controller) to control a fixed active and reactive power operation point and/or a converter energy balance.

The underlying current controller 17 can comprise for example a second order generalized integrator, a dq controller, a resonant controller or similar.

## Claims

1. Converter (1) having an AC side (2) to be connected to a AC network (4) at a connecting point (2a), and a grid following controller (14) configured to control a steady state current at said connecting point (2a), **characterized in that**
the converter (1) further comprises a grid forming controller (15) configured to actively control the frequency and/or voltage at said connecting point (2a), wherein the grid following controller (14) and the grid forming controller (15) share an underlying current controller (17).

2. Converter (1) according to claim 1, wherein the outputs of said grid forming and said grid following controller (14, 15) are connected with the underlying current controller (17) via a virtual admittance.

3. Converter (1) according to one of the preceding claims, wherein said grid forming controller (15) comprises a voltage angle and/or a frequency controller for active power control.

4. Converter (1) according to claim 3, wherein said voltage angle and/or a frequency controller is based on a model of an ideal answer of an electrical machine by means of a transfer function.

5. Converter (1) according to one of the preceding claims, wherein said grid forming controller comprises a voltage magnitude controller for reactive power control.

6. Converter (1) according to claim 5, wherein said voltage magnitude controller comprises a linear controller configured to change the reference amplitude of the AC voltage based on a reactive power reference and on a measured reactive power.

7. Converter (1) according to one of the preceding claims, wherein said grid forming controller (15) is designed for a sequence selective control, generating separate control setpoint to the underlying current controller for a positive and a negative sequence system.

8. Converter (1) according to one of the preceding claims, wherein said grid following controller (14) comprises a current setpoint controller to control a fixed active and reactive power operation point and/or a converter energy balance.

9. Converter (1) according to one of the preceding claims, wherein the converter (1) has a DC side (3) to be connected to a DC link (6) and/or to an electrical energy storage device (5).

10. Converter (1) according to one of the preceding claims, wherein the converter (1) is a modular multilevel converter.

11. Method for operating a converter (1) according to any of the preceding claims, comprising the steps of
- performing a grid following control by means of the grid following controller (14),
- performing a grid forming control by means of the grid forming controller (15), wherein
a switching over from said grid following control to said grid forming control is performed in an uninterrupted operation.
